# EUROPÄISCHE PATENTSCHRIFT

(11) **EP 0 574 348 B1**
(45) Veröffentlichungstag und Bekanntmachung des Hinweises auf die Patenterteilung: **07.10.1998**
(21) Anmeldenummer: 93810345.4
(22) Anmeldetag: 12.05.1993
(51) Int. Cl.: C08K 13/02, C08L 27/06

(54) **Mit Organozinnverbindungen stabilisierte PVC-Formmassen**
PVC moulding materials stabilized with organotin compounds
Masses à mouler en PVC stabilisées avec des composés organiques d'étain

(30) Priorität: 20.05.1992 CH 1631/92
(43) Veröffentlichungstag der Anmeldung: 15.12.1993
(73) Patentinhaber: Ciba Specialty Chemicals Holding Inc., 4057 Basel (CH)
(72) Erfinder: Kaufhold, Johannes, W-6145 Lindenfels (DE); Sander, Hans Jürgen, W-6143 Lorsch (DE); Weinhold, Günter Dr., W-6144 Zwingenberg/Bergstr. (DE)

(56) Entgegenhaltungen:
- EP-A- 0 489 545
- EP-A- 0 522 810
- GB-A- 2 191 203
- CHEMICAL ABSTRACTS, vol. 107, no. 2, 13. Juli 1987, Columbus, Ohio, US; abstract no. 8300w,
- DATABASE WPI Week 9135, Derwent Publications Ltd., London, GB; AN 91-257269

## Beschreibung

Die Erfindung betrifft Zusammensetzungen aus einem Vinylhalogenid-Homopolymeren (PVC) und mindestens einem Copolymer, die mindestens eine Organozinnverbindung und ein Perchlorat als Stabilisator enthalten, die Verwendung dieser Zusammensetzungen sowie ein Verfahren zum Stabilisieren von PVC-Formmassen.

Die Herstellung von Weich-PVC für Automobil-Innenauskleidungen, deren Stabilisatormischung Perchlorat enthält, wird beispielsweise in JP-A-61-34041 und JP-A-63-57656 beschrieben.

Der kombinierte Einsatz von Organozinn-Stabilisatoren mit Perchlorsäure oder perchlorathaltigen Substanzen ist für die Herstellung von Hart-PVC bekannt, siehe z.B. JP-A-53-59744, JP-A-61-272258, JP-A-01-236252.

JP-A-62-252445 beschreibt weichgemachtes PVC, in dessen Stabilisatormischung Dimethylzinn-perchlorat enthalten ist.

Eine Stabilisatormischung bestehend aus dem Salz einer Piperidinverbindung und Perchlorsäure sowie optional einem Metalloxid oder -hydroxid, die für PVC, PVC-Blends und halogenfreie Polymere verwendbar ist, ist durch die Publikation EP-A-344 321 bekannt; JP-A-59-184240 beschreibt eine stabilisierte Zusammensetzung aus PVC und einem halogenfreien Copolymer, deren Stabilisatormischung ebenfalls ein Perchlorat enthält.

Diverse Artikel aus PVC-Blends, d.h. Mischungen aus PVC und einem Copolymer, neigen dazu, flüchtige Stoffe an die Umgebung abzugeben und sich strukturell zu verändern, wenn sie langdauernder Wärmeeinwirkung ausgesetzt sind. Beispielsweise können sich Kraftfahrzeuginnenauskleidungen aus den genannten Materialien bei intensiver Sonneneinstrahlung auf Temperaturen bis zu 135°C erwärmen. Die genannten Materialveränderungen können unerwünschte Folgen für die Gebrauchseigenschaften haben; so können Verfärbungen des Materials oder Risse auftreten. Ursachen für das Auftreten der unerwünschten Effekte können mangelhafte Wirksamkeit oder Verflüchtigung von Additiven sein, z.B. Weichmachern oder Stabilisatoren. In Chemical Abstracts 105, 116014y, und US-A-4954546 werden daher Organozinnverbindungen mit verminderter Flüchtigkeit eingesetzt. Es besteht jedoch weiterhin ein Bedürfnis nach stabilisierten PVC-Formmassen, deren Verwendung nicht oder in wesentlich geringerem Ausmaß mit den vorstehend genannten Nachteilen verbunden ist.

Es wurde nun gefunden, daß der Einsatz bestimmter Zinnstabilisatoren in Kombination mit Perchloraten überraschenderweise die geschilderten Probleme bei Artikeln aus einigen PVC-Blends zu lösen bzw. zu vermindern vermag.

Die Erfindung betrifft daher eine Zusammensetzung enthaltend
(a) 20-80 Gew.-% eines Vinylchlorid-Homopolymeren (PVC),
(b) 80-20 Gew.-% mindestens eines Copolymeren aus der Gruppe ABS, NBR, NAR, SAN und EVA,
(c) 0,5-5 Gew.-% (bezogen auf (a) und (b)) mindestens einer Organozinnverbindung einer der Formeln I bis V

   [R¹]ᵢSn[-Q-R²]₄₋ᵢ (I) 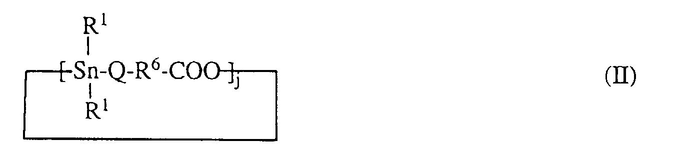 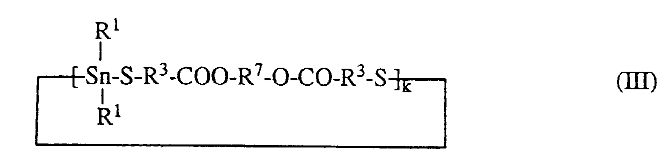 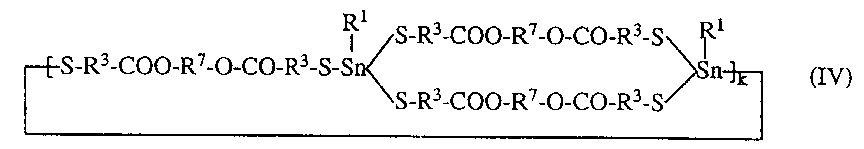 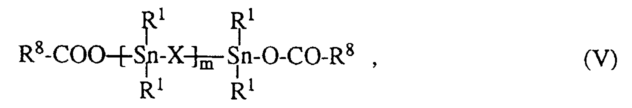
wobei i die Zahl 1 oder 2, j eine Zahl aus dem Bereich von 1 bis 6, k eine Zahl aus dem

Bereich von 1 bis 3 und m eine Zahl aus dem Bereich von 1 bis 4 darstellt,
R¹ C₁-C₁₂-Alkyl oder C₁-C₈-Alkoxycarbonylethyl bedeutet,
Q die Bedeutung von -S- oder -O-CO- hat und,
wenn Q für -S- steht, R² C₈-C₁₈-Alkyl oder ein Rest -R³-COO-R⁴ ist, und,
wenn Q für -O-CO- steht, R² C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
R³ Methylen, Ethylen oder o-Phenylen,
R⁴ C₅-C₁₈-Alkyl,
R⁵ C₁-C₁₈-Alkyl, C₅-C₇-Cycloalkyl oder Benzyl bedeutet,
wenn Q für -S- steht, R⁶ Methylen, Ethylen oder o-Phenylen, und,
wenn Q für -O-CO- steht, R⁶ C₁-C₈-Alkylen, o-Phenylen oder eine Gruppe -CH=CH- bedeutet,
R⁷ C₂-C₄-Alkylen oder durch -O- unterbrochenes C₄-C₈-Alkylen darstellt,
R⁸ C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
X die Bedeutung -O- oder/und -O-CO-R⁹-COO- hat, und
R⁹ C₁-C₈-Alkylen, o-Phenylen oder eine Gruppe -CH=CH- bedeutet, sowie
(d) 0,01-1,0 Gew.-% (bezogen auf (a) und (b)) mindestens eines Perchlorates eines ein- und/oder zweiwertigen Metalles.

Eine Zusammensetzung bestehend aus 50 Gew.-teilen PVC, 50 Gew.-teilen ABS, 1.0 Gew.-teilen polymerem Dioctylzinndimaleat, 0.5 Gew.-teilen Mg₄Al₂(OH)₁₂CO₃•3H₂O, 0.8 Gew.-teilen Glycerin monostearat, 0.4 Gew.-teilen Wachs, 0.5 Gew.-teilen Mg₃ZuAl₂(OH)₁₂(CO₃)_{0.4}(ClO₄)_{1.2}•3H₂O oder 0.5 Gew.-teilen Mg₃ZnAl₂(OH)₁₂(ClO₄)_{2.0}•3H₂O oder 0.5 Gew-teilen Mg₄Al₂(OH)₁₂(CO₃)_{0.4}(ClO₄)_{1.2}•3H₂O und 0.05 Gew.-teilen Zinkstearat ist ausgeschlossen.

Die oben und in der gesamten Beschreibung und in den Patentansprüchen verwendete abgekürzte Schreibweise -COO- bedeutet die Gruppierung 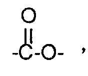 die Schreibweise -O-CO- die Gruppierung 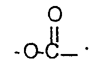 Die verwendeten Abkürzungen für die Copolymeren sind dem Fachmann geläufig und bedeuten folgendes:
ABS: Acrylnitril-Butadien-Styrol;
SAN: Styrol-Acrylnitril;
NBR: Acrylnitril-Butadien;
NAR: Acrylnitril-Acrylat;
EVA: Ethylen-Vinylacetat.

Die erfindungsgemäße Zusammensetzung kann weitere Copolymere als Modifikatoren enthalten. Ebenso möglich ist es, die oben genannten Copolymere selbst in modifizierter Form einzusetzen. Der Einsatz von Modifikatoren, beispielsweise als Blends oder als Pfropf-Copolymere, zur Verbesserung der Gebrauchseigenschaften ist dem Fachmann bekannt.

R¹, R², R⁴, R⁵ und R⁸ als Alkyl sind im Rahmen der angegebenen Bedeutungen z.B. Methyl, Ethyl, Propyl, Isopropyl, Butyl, Isobutyl, tert-Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl oder Octadecyl.

R¹ als C₁-C₈-Alkoxycarbonylethyl bedeutet C₁-C₈-Alkyl-O-CO-CH₂-CH₂-.

R¹ hat bevorzugt die Bedeutung von Methyl, Butyl oder Octyl, vor allem Butyl oder Octyl.

R² und R⁸ als C₂-C₁₈-Alkenyl bedeuten u.a. Ethenyl (Vinyl), Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Heptadec-8-enyl, n-Octadec-2-enyl, n-Octadec-4-enyl.

Die Bedeutung von R² und R⁸ als mit C₁-C₄-Alkyl substituiertes Phenyl umfasst beispielsweise Methylphenyl, Dimethylphenyl, Trimethylphenyl, Ethylphenyl, Diethylphenyl, Isopropylphenyl, tert.-Butylphenyl.

R², R⁶, R⁸ und R⁹ als -CH=CH-COO-R⁵ beziehungsweise -CH=CH- leiten sich von Maleinsäure oder Fumarsäure ab, vorzugsweise von Maleinsäure.

R⁵ als C₅-C₇-Cycloalkyl ist Cyclopentyl, Cyclohexyl oder Cycloheptyl, vorzugsweise Cyclopentyl oder Cyclohexyl, vor allem Cyclohexyl.

R⁶ und R⁷ als Alkylen bedeuten einen zweiwertigen Alkylrest; im Rahmen der angegebenen Kettenlängen sind R⁶ und R⁷ z.B. Methylen, Ethylen, -CH(CH₃)-CH₂-, -(CH₂)₃-, -(CH₂)₄-, -(CH₂)₆-, -(CH₂)₈-, -CH₂-CH(C₂H₅)-(CH₂)₄-, -CH₂-C(CH₃)₂-CH₂-; bevorzugt sind geradkettige Reste. R⁷ bedeutet als durch -O- unterbrochenes C₄-C₈-Alkylen beispielsweise -CH₂-CH₂-O-CH₂-CH₂-, -CH₂-CH₂-CH₂-O-CH₂-CH₂-CH₂-, -CH₂-CH₂-O-(CH₂)₄- oder -(CH₂)₄-O-(CH₂)₄-, insbesondere -CH₂-CH₂-O-CH₂-CH₂-.

Die erfindungsgemäßen Zusammensetzungen enthalten als Komponente (c) vorzugsweise ein Gemisch von Verbindungen. Zusammensetzungen, welche als Komponente (c) nur eine Verbindung enthalten, sind jedoch auch Gegenstand der Erfindung und weisen die gleichen vorteilhaften Eigenschaften auf.

Bevorzugt enthalten die erfindungsgemäßen Zusammensetzungen als Verbindungen der Komponente (c) solche, worin
R¹ C₁-C₁₂-Alkyl bedeutet,
wenn Q für -S- steht, R² C₈-C₁₈-Alkyl oder ein Rest -R³-COO-R⁴ ist, und,
wenn Q für -O-CO- steht, R² C₇-C₁₈-Alkyl, C₈-C₁₈-Alkenyl, Phenyl, oder ein Rest -CH=CH-COO-R⁵ ist,
R³ Methylen, Ethylen oder o-Phenylen,
R⁴ C₅-C₁₈-Alkyl,
R⁵ C₁-C₁₈-Alkyl oder C₅-C₇-Cycloalkyl bedeutet,
wenn Q für -S- steht, R⁶ Methylen, Ethylen oder o-Phenylen, und,
wenn Q für -O-CO- steht, R⁶ C₁-C₄-Alkylen, o-Phenylen oder eine Gruppe -CH=CH- bedeutet,
R⁷ C₂-C₄-Alkylen oder durch -O- unterbrochenes C₄-C₈-Alkylen darstellt,
R⁸ C₁-C₁₈-Alkyl, C₂-C₁₈-Alkenyl, Phenyl, oder ein Rest -CH=CH-COO-R⁵ ist, und
R⁹ Butylen, o-Phenylen oder eine Gruppe -CH=CH- bedeutet.

Besonders bevorzugt bedeuten in den Verbindungen der Komponente (c)
R¹ C₃-C₉-Alkyl,
wenn Q für -S- steht, R² einen Rest -R³-COO-R⁴, und,
wenn Q für -O-CO- steht, R² C₇-C₁₁-Alkyl oder einen Rest -CH=CH-COO-R⁵,
R³ Methylen oder Ethylen,
R⁴ C₈-C₁₈-Alkyl,
R⁵ C₁-C₈-Alkyl oder Cyclohexyl,
wenn Q für -S- steht, R⁶ Methylen oder Ethylen, und,
wenn Q für -O-CO- steht, R⁶ eine Gruppe -CH=CH-,
R⁷ -C₂H₄-,
R⁸ C₈-C₁₂-Alkyl oder einen Rest -CH=CH-COO-R⁵, und
R⁹ eine Gruppe -CH=CH-.

Die genannten Gruppierungen -CH=CH- sind besonders bevorzugt cis-ständig und leiten sich in den Verbindungen von der Maleinsäure ab.

Zusammensetzungen, welche als Verbindung(en) der Komponente (c) solche der Formeln I, III und/oder IV enthalten, worin Q -S- bedeutet, sind ebenfalls besonders bevorzugt. Vor allem bevorzugt sind Zusammensetzungen, welche als Verbindung(en) der Komponente (c) solche der Formel I enthalten, worin Q -S-, R¹ Butyl oder Octyl und R² einen Rest -CH₂-COO-R⁴- oder -(CH₂)₂-COO-R⁴ bedeuten.

Weiterhin bilden die Zusammensetzungen einen bevorzugten Gegenstand der Erfindung, worin die Verbindung(en) der Komponente (c) der Formel I, der Formel II und/oder der Formel V entsprechen.

Bevorzugt sind Polymerzusammensetzungen, die als Komponenten (a) und (b) eine Mischung aus 25-75 Gew.-% PVC und 75-25 Gew.-% der genannten Copolymeren enthalten. Beispiele für solche Zusammensetzungen sind: 25-50 Gew.-% PVC und 75-50 Gew.-% Copolymere bzw. 40-75 Gew.-% PVC und 60-25 Gew.-% Copolymere. Bevorzugte Copolymere sind ABS, SAN und modifiziertes EVA, insbesondere ABS. Besonders geeignet sind auch NBR, NAR und EVA. In der erfindungsgemäßen Zusammensetzung können einer oder mehrere der genannten Copolymerentypen vorhanden sein.

Bei den Verbindungen der Komponente (d) kann es sich um Perchlorate einwertiger Metalle, z.B. der Alkalimetalle, darunter Li-, Na- und KClO₄, oder um Perchlorate zweiwertiger Metalle handeln, z.B. der Metalle der 2. Haupt- oder Nebengruppe des Periodensystems und anderer zweiwertiger Metalle wie Pb oder Cu, darunter Ca-, Sr- und Ba(ClO₄)₂. Die Komponente (d) kann aus einer einzelnen Verbindung oder einem Gemisch von Perchloraten bestehen. Komponente (d) ist in den Zusammensetzungen vorzugsweise in einer Menge von 0,05 bis 1,0 Gew.-% (bezogen auf (a) und (b)) enthalten.

Die erfindungsgemäße Zusammensetzung enthält als Komponente (d) bevorzugt Kalium-, Natrium-, Barium- oder Calciumstearat oder eine Mischung dieser Stoffe.

Die erfindungsgemäße Zusammensetzung enthält die Komponenten (c) und (d) bevorzugt im Mengenverhältnis 0,8 bis 50 Gewichtsteile (c) zu 1 Gewichtsteil (d), vor allem 2 bis 35 Gewichtsteile (c) zu 1 Gewichtsteil (d).

Die erfindungsgemäßen Zusammensetzungen können weichmacherfrei sein, sie können aber auch übliche Monomer- oder/und Polymerweichmacher enthalten. Als Polymerweichmacher können beispielsweise unter (b) genannte Elastomere dienen. Darüberhinaus können die erfindungsgemäßen Zusammensetzungen noch weitere Weichmacher enthalten, z.B. in einer Menge bis zu 50 Gew.-%, etwa von 0,1 bis 50, insbesondere 5 bis 50, z.B. 10 bis 40 Gew.-% (jeweils bezogen auf die Summe der Komponenten (a) und (b)). Bevorzugt sind Zusammensetzungen, die auf 100 Gewichtsteile (a) und (b) als Komponente (e) 5-50 Gewichtsteile eines Monomer- oder/und Polymerweichmachers enthalten.

Als Weichmacher kommen die in der PVC-Technologie üblichen in Betracht. Beispiele sind aufgeführt in GB-A-2 212 808, Seiten 4-6, sowie in R. Gächter/H. Müller, Plastics Additives Handbook, S. 327-422, Hanser-Verlag, 3. Auflage, München 1990. Wichtige Monomerweichmacher sind beispielsweise Phthalsäureester wie DOP (Dioctylphthalat, Di-2-ethylhexyl-phthalat), DINP (Diisononylphthalat), DIDP (Diisodecylphthalat) und Trimellithsäureester wie TOTM (Trioctyltrimellitat, Tri-2-ethylhexyl-trimellitat), TIDTM (Triisodecyltrimellitat), TITDTM (Triisotridecyltrimellitat).

Von besonderer Bedeutung sind Zusammensetzungen enthaltend als Komponente (a) 100 Gewichtsteile PVC, als Komponente (b) 100-300 Gewichtsteile ABS und/oder mit SAN modifiziertes ABS und 0-80 Gewichtsteile der Copolymeren NBR, NAR und/oder EVA, insbesondere jedoch EVA,
sowie als Komponente (e) auf 100 Gewichtsteile (a) und (b) 5-30 Gewichtsteile weiterer Weichmacher, insbesondere Phthalsäureester wie DOP, DINP, DIDP und/oder Trimellithsäureester wie TOTM, TIDTM, TITDTM,
und die Komponenten (c) und (d) wie oben beschrieben.

Die Herstellung der erfindungsgemäßen Zusammensetzungen erfolgt nach bekannten Verfahren. Die Stabilisatoren werden den Polymerblends vor der Verarbeitung in bekannter Weise zugemischt. Eine homogene Mischung kann z.B. mit Hilfe bekannter Apparaturen bei Temperaturen zwischen 150 und 210°C erhalten werden.

Die erfindungsgemäßen Zusammensetzungen können vorteilhafterweise auch übliche Mengen weiterer, herkömmlicher PVC-Stabilisatoren und/oder weiterer Zusätze enthalten, beispielsweise Epoxyverbindungen, Phosphite, Metallcarboxylate und Metallphenolate von Metallen der zweiten Haupt- und Nebengruppe des Periodensystems, oder auch anorganische Salze von Metallen der zweiten Nebengruppe des Periodensystems, sowie Antioxidantien.

Costabilisatoren werden bevorzugt in Mengen von 0,05 bis 6, insbesondere 0,1 bis 3 %, bezogen auf die gesamte Zusammensetzung, eingearbeitet.

Geeignete herkömmliche Phosphite entsprechen der allgemeinen Formel 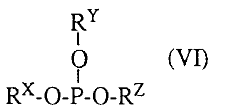 in der R^{X}, R^{Y} und R^{Z} gleich oder verschieden sind und C₆-C₁₈-Alkyl, C₆-C₁₈-Alkenyl, einen substituierten oder unsubstituierten Phenylrest oder C₅-C₇-Cycloalkyl bedeuten.

Als weitere Costabilisatoren seien Zeolithe genannt, sowie Hydrotalcite, z.B. solche der Formel 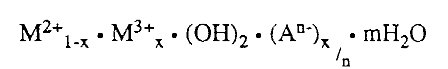 wobei
- M²⁺ =: Mg, Ca, Sr, Ba, Zn, Cd, Pb, Sn und/oder Ni ist,
- M³⁺ =: Al, B oder Bi ist,
- Aⁿ: ein Anion mit der Valenz n darstellt,
- n: eine Zahl von 1-4 ist,
- x: eine Zahl von 0-0,5 ist,
- m: eine Zahl von 0-2 ist und
- A =: OH⁻, Cl⁻, Br⁻, I⁻, ClO₄⁻, HCO₃⁻, CH₃COO⁻, C₆H₅COO⁻, CO₃²⁻, SO₄²⁻ 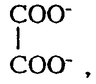 (CHOHCOO)₂²⁻, (CHOH)₄CH₂OHCOO⁻, C₂H₄(COO)₂²⁻, (CH₂COO)₂²⁻, CH₃CHOHCOO⁻, SiO₃²⁻, SiO₄⁴⁻, Fe(CN)₆³⁻, Fe(CN)₆⁴⁻ oder HPO₄²⁻ darstellt.

Andere Hydrotalcite, die eingesetzt werden können, sind Verbindungen mit der allgemeinen Formel Ia

Mₓ²⁺Al₂(OH)_{2x+6nz}(Aⁿ⁻)₂·mH₂O

worin M²⁺ wenigstens ein Metall aus der Reihe von Mg und Zn darstellt und Mg bevorzugt ist, Aⁿ⁻ ein Anion, beispielsweise aus der Reihe von CO₃²⁻, 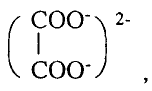 OH⁻ und S²⁻, darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Ebenfalls als zusätzliche Stabilisatoren können Metallcarboxylate und -phenolate von Metallen der zweiten Haupt- und Nebengruppe des Periodensystems, oder auch anorganische Salze von Metallen der zweiten Nebengruppe des Periodensystems, wie z.B. ZnCl₂, eingesetzt werden.

Beispiele von Metallcarboxylaten sind die Metallsalze von gesättigten, ungesättigten oder mit Hydroxylgruppen substituierten aliphatischen Carbonsäuren mit 6 bis 20 C-Atomen, wie Hexansäure, Heptansäure, Octansäure, 2-Ethylhexansäure, Undecylsäure, Laurinsäure, Myristinsäure, Palmitinsäure, Stearinsäure, 12-Oxystearinsäure, Oelsäure, Linolsäure oder Ricinolsäure. Ebenfalls von Interesse sind die Metallsalze von aromatischen Carbonsäuren, wie beispielsweise substituierte Phenylbenzoate. Bevorzugt sind Metalle aus der Reihe Ba, Sr, Ca, Mg, Zn und Cd. Bevorzugte Metallcarboxylate sind beispielsweise Ca- oder Zn-Stearat, Ba-p-tert.-Butylbenzoat und Zn- und Ca-Oleat.

Als Metallphenolate kommen insbesondere die Metallsalze von Phenolen mit 6-20 C-Atomen in Frage, beispielsweise Alkylphenolen wie p-tert.-Butyl-, p-Octyl-, p-Nonyl- oder p-Dodecylphenol. Ein Beispiel hierfür ist Ba-p-n-Nonylphenolat.

Bevorzugte Antioxidantien sind alkylierte Monophenole, Alkyliden-Bis-phenole und phenylsubstituierte Propionsäureester, insbesondere aber 2,6-Di-tert.-butyl-p-kresol, 2,2-Bis-(4'-hydroxyphenyl)-propan und β-(3,5-Di-tert.-butyl-4-hydroxyphenyl)-propionsäure-n-octadecylester.

Je nach dem Verwendungszweck der erfindungsgemäßen Zusammensetzungen können vor oder mit der Einarbeitung des Stabilisators auch noch weitere Zusätze eingearbeitet werden, wie z.B. Gleitmittel (bevorzugt Montanwachse oder Glycerinester), Fettsäureester, Paraffine, Weichmacher, Füllstoffe, Ruß, Kaolin, Talk, Silikate, Glasfasern, Modifikatoren, optische Aufheller, Pigmente, Lichtstabilisatoren, UV-Absorber, Flammschutzmittel oder Antistatika.

Bevorzugte derartige Zusätze sind Gleitmittel, Pigmente, Verarbeitungshilfen, Füllstoffe, Antioxidantien und/oder Lichtschutzmittel.

Von besonderer praktischer Bedeutung sind erfindungsgemäße Zusammensetzungen, welche keine gehinderten Amine, insbesondere keine vom Typ der Polyalkylpiperidine enthalten.

Die Komponenten (c) und (d) der erfindungsgemäßen Zusammensetzungen sowie optionale Zusätze können den zu stabilisierenden Polymeren auch in Form eines Masterbatches zugesetzt werden. Dieser kann beispielsweise 10 bis 40 Gew.-% der Komponente (c), 1 bis 20 Gew.-% der Komponente (d), und Polymere der Komponenten (a) oder (b), Costabilisatoren wie Hydrotalcite, Weichmacher, Verarbeitungshilfen, Füllstoffe oder eine Kombination dieser Stoffe enthalten.

Die erfindungsgemäßen Zusammensetzungen können nach den dafür gebräuchlichen Formgebungsverfahren, z.B. durch Spritzgießen, Kalandrieren oder Extrusion, insbesondere Flachfolienextrusion, zu Formteilen verarbeitet werden.

Bevorzugt werden die erfindungsgemäßen Zusammensetzungen für die Herstellung von Hohlkörpern und Folien in der Kraftfahrzeugindustrie verwendet. Diese Verwendung ist ebenfalls Gegenstand der Erfindung. Ein besonders bevorzugtes Einsatzgebiet ist die Herstellung von Folien für Kraftfahrzeuginnenräume, sogenannter Crashpad-Folien, insbesondere wie sie in der DE-A-3 227 107 und der DE-A-3 401 482 beschrieben sind.

Die erfindungsgemäßen Zusammensetzungen werden besonders vorteilhaft zur Herstellung von Tiefzieh- und Weichfolien auf PVC-Basis herangezogen, vor allem zur Verwendung in der Kraftfahrzeugindustrie.

Wie aus der Chemie der Organozinnstabilisatoren bekannt, liegen letztere im stabilisierten Substrat oft nicht mehr in der Form vor, wie sie zugegeben wurden. Es entstehen Reaktions-(Komproportionierungs-)produkte. Die Erfindung umfaßt selbstverständlich auch Zusammensetzungen, die solche aus den Verbindungen der Komponente (c), entsprechend den Formeln I bis V, entstandene Produkte enthalten.

Die Organozinnverbindungen der Formeln I bis V sind bekannt. Siehe z.B. die eingangs genannten Literaturstellen.

Gemeinsam mit den Verbindungen der Komponente (c) der Formeln I bis V können in den erfindungsgemäßen Zusammensetzungen auch noch weitere Zinnstabilisatoren enthalten sein, sofern sie die durch die genannten Verbindungen erzielten verbesserten Eigenschaften nicht nachteilig beeinflussen. Bevorzugt sind jedoch die erfindungsgemäßen Zusammensetzungen, welche neben den oben beschriebenen Organozinnverbindungen der Komponente (c) und deren Komproportionierungsprodukten keine weiteren Zinnstabilisatoren enthalten.

Ein weiterer Gegenstand der Erfindung ist die Verwendung der Organozinnverbindungen der Komponente (c) in Kombination mit den oben als Komponente (d) definierten Perchloraten ein- und/oder zweiwertiger Metalle zum Stabilisieren von Formmassen aus 20-80 Gew.-% eines Vinylchlorid-Homopolymeren (PVC) und 80-20 Gew.-% mindestens eines Copolymeren aus der Gruppe ABS, NBR, NAR, SAN und EVA, gegen den schädigenden Einfluß von Wärme und Licht. Dies schließt auch ein Verfahren zum Stabilisieren von Formmassen aus (a) 20-80 Gew.-% eines Vinylchlorid-Homopolymeren (PVC) und (b) 80-20 Gew.-% mindestens eines Copolymeren aus der Gruppe ABS, NBR, NAR, SAN und EVA, gegen den schädigenden Einfluß von Wärme und Licht ein, welches dadurch gekennzeichnet ist, daß man den Massen (auf 100 Gewichtsteile (a) und (b)) 0,5-5 Gewichtsteile mindestens einer der oben als Komponente (c) definierten Organozinnverbindungen in Kombination mit 0,01-1,0 Gewichtsteilen (auf 100 Gewichtsteile (a) und (b)) mindestens einer der oben als Komponente (d) definierten Perchlorate ein- und/oder zweiwertiger Metalle zusetzt.

Die nachfolgenden Beispiele (thermische Langzeitbelastung von Folien und Messung des Verfarbungsgrades) erläutern die Erfindung weiter. Teile- und Prozentangaben beziehen sich darin, ebenso wie in der übrigen Beschreibung und in den Patentansprüchen, auf das Gewicht der Summe der Komponenten (a) und (b), sofern nichts anderes angegeben ist.

### Beispiel 1:

Eine Mischung aus

| | |
|---|---|
| 50,0 | Gewichtsteilen S-PVC (K-Wert 70), |
| 30,0 | Gewichtsteilen ABS (Blendex® 101, Hersteller General Electric Corp.), |
| 30,0 | Gewichtsteilen ABS, mit SAN modifiziert (Hersteller Bayer, Typ KL 2065), |
| 10,0 | Gewichtsteilen EVA, modifiziert (Elvaloy®, Hersteller Du Pont), |
| 15,0 | Gewichtsteilen Trimellitsäureester (Weichmacher, Typ REOMOL® LTM, |
| | Hersteller Ciba-Geigy Marienberg GmbH), |
| 3,0 | Gewichtsteilen Rutil (Kronos RN 57P) und |
| 2,5 | Gewichtsteilen Organdzinnstabilisator aus 25 Gew.-% C₄H₉Sn(S-CH₂-COO-i-C₈H₁₇)₃ und 75 Gew.-% (C₄H₉)₂Sn(S-CH₂-COO-i-C₈H₁₇)₂ (i-C₈H₁₇ steht dabei für ein Gemisch verschiedener isomerer Octylreste) |

wird in üblicher Weise auf einem Mischwalzwerk bei einer Temperatur von 190°C während 5 Minuten zu einer 0,4 mm dicken Folie ausgewalzt. 4 x 4 cm große Stücke dieser Folie werden in einem Trockenschrank bei 120°C gelagert. Die Prüfkörper werder dabei so aufgehängt, daß beide Folienseiten frei sind. In einem Zeitabstand von jeweils 72 Stunden werden Prüfkörper zur Bestimmung des Farbabstandswertes gemäß DIN 5033 entnommen (Versuch I, Vergleich).

Für den Versuch II (erfindungsgemäße Zusammensetzung) werden der oben angegebenen Mischung zusätzlich 0,08 Gewichtsteile Natriumperchlorat zugesetzt. Die Mischung wird anschließend in gleicher Weise verarbeitet und getestet.

Die Meßergebnisse (Farbabstand nach DIN 5033 und DIN 6174) sind in der nachfolgenden Tabelle 1 zusammengestellt. Ein höherer Farbabstandswert zeigt eine stärkere Verfärbung an.

**Tabelle 1:**

| Farbabstandswert der Prüfkörper nach Lagerung bei 120°C | | | | | | | | |
|---|---|---|---|---|---|---|---|---|
| | Farbabstand ΔE (gemäß DIN 5033/DIN 6174) nach | | | | | | | |
| Versuch | 0 h | 72 h | 144 h | 216 h | 288 h | 360 h | 432 h | 504 h |
| I | 10.6 | 18.3 | 25.7 | 27.9 | 30.3 | 33.4 | 34.8 | 36.4 |
| II | 12.2 | 17.5 | 22.0 | 23.3 | 26.0 | 28.1 | 29.4 | 31.6 |

Die Meßergebnisse zeigen für die erfindungsgemäße Zusammensetzung nach thermischer Belastung einen niedrigeren Farbabstandswert, was auf eine bessere thermostabilisierende Wirkung im Vergleich zur perchloratfreien Zusammensetzung hinweist.

### Beispiel 2:

Mischungen bestehend aus

| | |
|---|---|
| 50,0 | Gewichtsteilen S-PVC (K-Wert 70), |
| 30,0 | Gewichtsteilen ABS (Blendex® 101, Hersteller General Electric Corp.), |
| 30,0 | Gewichtsteilen ABS, mit SAN modifiziert (Hersteller Bayer, Typ KL 2065), |
| 10,0 | Gewichtsteilen EVA, modifiziert (Elvaloy®, Hersteller Du Pont), |
| 15,0 | Gewichtsteilen Trimellitsäureester (Weichmacher, Typ REOMOL® LTM, |
| | Hersteller Ciba-Geigy Marienberg GmbH), |
| 3,0 | Gewichtsteilen Rutil (Kronos RN 57P) und |
| 1,5 | Gewichtsteilen des unten beschriebenen Organozinnstabilisators A oder B |

werden entsprechend der in Beispiel 1 beschriebenen Methode hergestellt und getestet (Versuche I und III, Vergleich).

Organozinnstabilisator A ist das Gemisch bestehend aus 40 Gew.-% der Verbindung 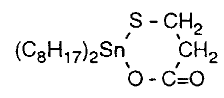 und 60 Gew.-% der Verbindung 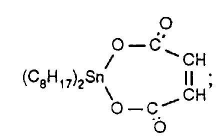 Organozinnstabilisator B ist das Gemisch bestehend aus 66,7 Gew.-% der Verbindung 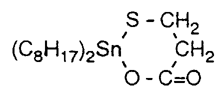 und 33,3 Gew.-% der Verbindung

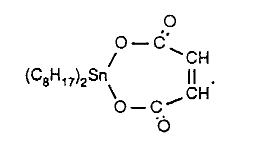

Für die Versuche II und IV werden der beschriebenen Mischung zusätzlich jeweils 0,13 Gewichtsteile NaClO₄ zugesetzt (erfindungsgemäße Zusammensetzungen).

In einem Zeitabstand von jeweils 48 Stunden werden Prüfkörper zur Bestimmung des Farbabstandswertes gemäß DIN 5033 entnommen.

Die Meßergebnisse (Farbabstand nach DIN 5033 und DIN 6174) sind in der nachfolgenden Tabelle 2 zusammengestellt. Ein höherer Farbabstandswert zeigt eine stärkere Verfärbung an.

**Tabelle 2:**

| Farbabstandswert der Prüfkörper nach Lagerung bei 120°C | | | | | | | | | | |
|---|---|---|---|---|---|---|---|---|---|---|
| | Farbabstand ΔE (gemäß DIN 5033/DIN 6174) nach | | | | | | | | | |
| Versuch | 0h | 48h | 96h | 144h | 192h | 240h | 288h | 336h | 384h | 432h |
| I | 11.4 | 19.1 | 22.4 | 31.4 | 33.1 | 39.5 | 44.0 | 48.0 | 49.9 | 51.3 |
| II | 11.2 | 18.1 | 20.9 | 26.8 | 27.0 | 30.2 | 33.6 | 35.6 | 37.0 | 38.1 |
| III | 11.2 | 20.7 | 24.0 | 32.9 | 35.1 | 40.6 | 45.6 | 47.7 | 49.9 | 51.3 |
| IV | 11.6 | 20.5 | 22.5 | 27.1 | 27.5 | 30.7 | 33.7 | 35.3 | 37.1 | 36.0 |

Die Meßergebnisse zeigen für die erfindungsgemäßen Zusammensetzungen nach thermischer Belastung einen deutlich niedrigeren Farbabstandswert.

## Patentansprüche

1. Zusammensetzung enthaltend
(a) 20-80 Gew.-% eines Vinylchlorid-Homopolymeren (PVC),
(b) 80-20 Gew.-% mindestens eines Copolymeren aus der Gruppe Acrylnitril-Butadien-Styrol (ABS), Acrylnitril-Butadien (NBR), Acrylnitril-Acrylat (NAR), Styrol-Acrylnitril (SAN) und Ethylen-Vinylacetat (EVA),
(c) 0,5-5 Gew.-% (bezogen auf (a) und (b)) mindestens einer Organozinnverbindung einer der Formeln I bis V
[R¹]ᵢSn[-Q-R²]₄₋ᵢ (I) 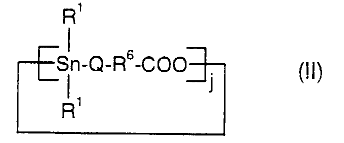 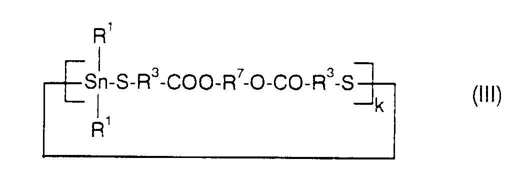 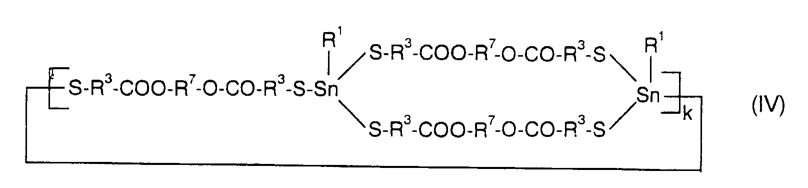 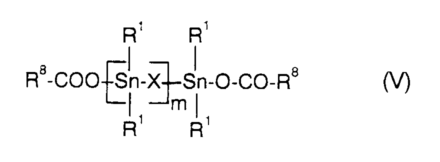
wobei i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellt,
R¹ C₁-C₁₂-Alkyl oder C₁-C₈-Alkoxycarbonylethyl bedeutet,
Q die Bedeutung von -S- oder -O-CO- hat und,
wenn Q für -S- steht, R² C₈-C₁₈-Alkyl oder ein Rest -R³-COO-R⁴ ist, und,
wenn Q für -O-CO- steht, R² C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
R³ Methylen, Ethylen oder o-Phenylen,
R⁴ C₅-C₁₈-Alkyl,
R⁵ C₁-C₁₈-Alkyl, C₅-C₇-Cycloalkyl oder Benzyl bedeutet,
wenn Q für -S- steht, R⁶ Methylen, Ethylen oder o-Phenylen, und,
wenn Q für -O-CO- steht, R⁶ C₁-C₈-Alkylen, o-Phenylen oder eine Gruppe -CH=CH- bedeutet,
R⁷ C₂-C₄-Alkylen oder durch -O- unterbrochenes C₄-C₈-Alkylen darstellt,
R⁸ C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
X die Bedeutung -O- oder/und -O-CO-R⁹-COO- hat, und
R⁹ C₁-C₈-Alkylen, o-Phenylen oder eine Gruppe -CH=CH- bedeutet, sowie
(d) 0,01-1,0 Gew.-% (bezogen auf (a) und (b)) mindestens eines Perchlorates eines ein- und/oder zweiwertigen Metalles,
wobei eine Zusammensetzung, bestehend aus
50 Gew.-teilen PVC,
50 Gew.-teilen ABS,
1,0 Gew.-teilen polymerem Dioctylzinndimaleat,
0,5 Gew.-teilen Mg₄Al₂(OH)₁₂CO₃•3 H₂O,
0,8 Gew.-teilen Glycerinmonostearat,
0,4 Gew.-teilen Wachs,
0,5 Gew.-teilen Mg₃ZnAl₂(OH)₁₂(CO₃)_{0,4}(ClO₄)_{1,2}•3 H₂O oder
0,5 Gew.-teilen Mg₃ZnAl₂(OH)₁₂(ClO₄)_{2,0}•3 H₂O oder
0,5 Gew.-teilen Mg₄Al₂(OH)₁₂(CO₃)_{0,4}(ClO₄)_{1,2}•3 H₂O und
0,05 Gew.-teilen Zinkstearat,
ausgeschlossen ist.

2. Zusammensetzung gemäß Anspruch 1, worin in den Verbindungen der Komponente (c)
R¹ C₁-C₁₂-Alkyl bedeutet,
wenn Q für -S- steht, R² C₈-C₁₈-Alkyl oder ein Rest -R³-COO-R⁴ ist, und,
wenn Q für -O-CO- steht, R² C₇-C₁₈-Alkyl, C₈-C₁₈-Alkenyl, Phenyl, oder ein Rest -CH=CH- COO-R⁵ ist,
R⁵ C₁-C₁₈-Alkyl oder C₅-C₇-Cycloalkyl bedeutet,
wenn Q für -O-CO- steht, R⁶ C₁-C₄-Alkylen, o-Phenylen oder eine Gruppe -CH=CH- bedeutet,
R⁸ C₁-C₁₈-Alkyl, C₂-C₁₈-Alkenyl, Phenyl, oder ein Rest -CH=CH-COO-R⁵ ist, und
R⁹ Butylen, o-Phenylen oder eine Gruppe -CH=CH- bedeutet.

3. Zusammensetzung gemäß Anspruch 2, worin in den Verbindungen der Komponente (c)
R¹ C₃-C₉-Alkyl bedeutet,
wenn Q für -S- steht, R² ein Rest -R³-COO-R⁴, und,
wenn Q für -O-CO- steht, R² C₇-C₁₁-Alkyl oder ein Rest -CH=CH-COO-R⁵ ist,
R³ Methylen oder Ethylen,
R⁴ C₈-C₁₈-Alkyl,
R⁵ C₁-C₈-Alkyl oder Cyclohexyl bedeutet,
wenn Q für -S- steht, R⁶ Methylen oder Ethylen, und,
wenn Q für -O-CO- steht, R⁶ eine Gruppe -CH=CH- bedeutet,
R⁷ -C₂H₄-,
R⁸ C₈-C₁₂-Alkyl oder einen Rest -CH=CH-COO-R⁵, und
R⁹ eine Gruppe -CH=CH- bedeutet.

4. Zusammensetzung gemäß Anspruch 3, welche als Verbindung(en) der Komponente (c) solche der Formeln I, III und/oder IV enthält, worin Q -S- bedeutet.

5. Zusammensetzung gemäß Anspruch 3, worin die Verbindung(en) der Komponente (c) der Formel I, der Formel II und/oder der Formel V entsprechen.

6. Zusammensetzung gemäß Anspruch 1, enthaltend als Komponente (a) 25-50 Gew.-% PVC und als Komponente (b) 75-50 Gew.-% mindestens eines der in Anspruch 1 genannten Copolymere.

7. Zusammensetzung gemäß Anspruch 1, enthaltend als Komponente (a) 40-75 Gew.-% PVC und als Komponente (b) 60-25 Gew.-% mindestens eines der in Anspruch 1 genannten Copolymere.

8. Zusammensetzung gemäß Anspruch 1, enthaltend als Komponente (d) Kalium-, Natrium-, Barium- und/oder Calciumperchlorat.

9. Zusammensetzung gemäß Anspruch 1, enthaltend auf 100 Gewichtsteile (a) und (b) zusätzlich
(e) 5-50 Gewichtsteile eines Monomer- oder/und Polymerweichmachers.

10. Zusammensetzung gemäß Anspruch 1, enthaltend zusätzlich Gleitmittel, Pigmente, Verarbeitungshilfen, Füllstoffe, Antioxidantien und/oder Lichtschutzmittel.

11. Zusammensetzung gemäß Anspruch 1, enthaltend neben den Organozinnverbindungen der Komponente (c) und deren Komproportionierungsprodukten keine weiteren Zinnstabilisatoren.

12. Verwendung von Zusammensetzungen nach einem der Ansprüche 1-11 zur Herstellung von Folien und Hohlkörpern in der Kraftfahrzeugindustrie.

13. Verwendung von in Anspruch 1 als Komponente (c) definierten Organozinnverbindungen in Kombination mit in Anspruch 1 als Komponente (d) definierten Perchloraten ein- und/oder zweiwertiger Metalle zum Stabilisieren von Formmassen aus 20-80 Gew.-% eines Vinylchlorid-Homopolymeren (PVC) und 80-20 Gew.-% mindestens eines Copolymeren aus der Gruppe Acrylnitril-Butadien-Styrol (ABS), Acrylnitril-Butadien (NBR), Acrylnitril-Acrylat (NAR), Styrol-Acrylnitril (SAN) und Ethylen-Vinylacetat (EVA), gegen den schädigenden Einfluß von Wärme und Licht.

14. Verfahren zum Stabilisieren von Formmassen aus (a) 20-80 Gew.-% eines Vinylchlorid-Homopolymeren (PVC) und (b) 80-20 Gew.-% mindestens eines Copolymeren aus der Gruppe Acrylnitril-Butadien-Styrol (ABS), Acrylnitril-Butadien (NBR), Acrylnitril-Acrylat (NAR), Styrol-Acrylnitril (SAN) und Ethylen-Vinylacetat (EVA), gegen den schädigenden Einfluß von Wärme und Licht, dadurch gekennzeichnet, daß man den Massen (auf 100 Gewichtsteile (a) und (b)) 0,5-5 Gewichtsteile mindestens einer der in Anspruch 1 als Komponente (c) definierten Organozinnverbindungen in Kombination mit 0,01-1,0 Gewichtsteilen (auf 100 Gewichtsteile (a) und (b)) mindestens einer der in Anspruch 1 als Komponente (d) definierten Perchlorate ein- und/oder zweiwertiger Metalle zusetzt.

## Claims

1. A composition comprising
(a) 20-80 % by weight of a vinyl chloride homopolymer (PVC),
(b) 80-20 % by weight of at least one copolymer from the group consisting of acrylonitrile-butadiene-styrene (ABS), acrylonitrile-butadiene (NBR),
acrylonitrile-acrylate (NAR), styrene-acrylonitrile (SAN) and ethylene-vinyl acetate (EVA),
(c) 0.5-5 % by weight (based on (a) and (b)) of at least one organotin compound of one of the formulae I to V
[R¹]ᵢSn[-Q-R²]₄₋ᵢ (I) 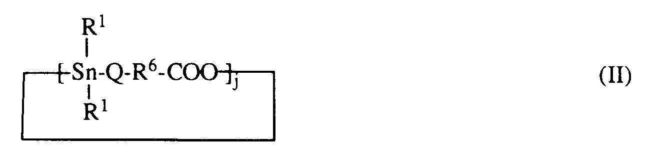 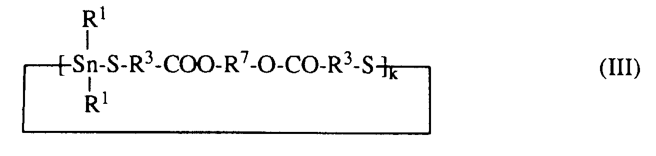 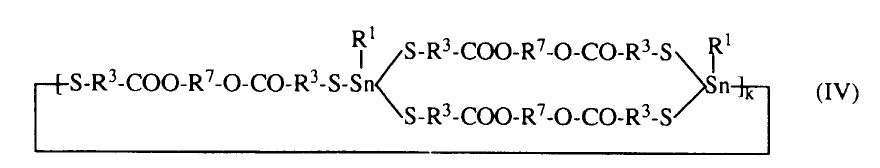 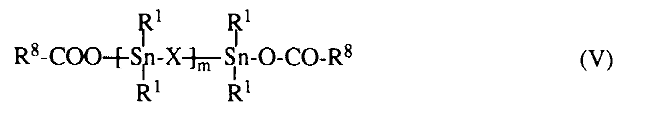
in which i is the number 1 or 2, j is a number in the range from 1 to 6, k is a number in the range from 1 to 3, and m is a number in the range from 1 to 4,
R¹ is C₁-C₁₂alkyl or C₁-C₈alkoxycarbonylethyl,
Q is -S- or -O-CO-,
when Q is -S-, R² is C₈-C₁₈alkyl or an -R³-COO-R⁴ radical, and,
when Q is -O-CO-, R² is C₁-C₁₈alkyl, C₂-C₁₈alkenyl, phenyl, C₁-C₄alkyl-substituted phenyl or a -CH=CH-COO-R⁵ radical,
R³ is methylene, ethylene or o-phenylene,
R⁴ is C₅-C₁₈alkyl,
R⁵ is C₁-C₁₈alkyl, C₅-C₇cycloalkyl or benzyl,
when Q is -S-, R⁶ is methylene, ethylene or o-phenylene, and,
when Q is -O-CO-, R⁶ is C₁-C₈alkylene, o-phenylene or a -CH=CH- group,
R⁷ is C₂-C₄alkylene, or C₄-C₈alkylene which is interrupted by -O-,
R⁸ is C₁-C₁₈alkyl, C₂-C₁₈alkenyl, phenyl, C₁-C₄alkyl-substituted phenyl or a -CH=CH-COO-R⁵ radical,
X is -O- and/or -O-CO-R⁹-COO-, and
R⁹ is C₁-C₈alkylene, o-phenylene or a -CH=CH- group, and
(d) 0.01-1.0 % by weight (based on (a) and (b)) of at least one perchlorate of a monovalent and/or divalent metal,
a composition consisting of
50 parts by weight of PVC,
50 parts by weight of ABS,
1.0 part by weight of polymeric dioctyltin dimaleate,
0.5 part by weight of Mg₄Al₂(OH)₁₂CO₃ · 3 H₂O,
0.8 part by weight of glycerol monostearate,
0.4 part by weight of wax,
0.5 part by weight of Mg₃ZnAl₂(OH)₁₂(CO₃)_{0.4}(ClO₄)_{1.2} · 3 H₂O or
0.5 part by weight of Mg₃ZnAl₂(OH)₁₂(ClO₄)_{2.0} · 3 H₂O or
0.5 part by weight of Mg₄Al₂(OH)₁₂(CO₃)_{0.4}(ClO₄)_{1.2}· 3 H₂O and
0.05 part by weight of zinc stearate
being excluded.

2. A composition according to claim 1, in which, in the compounds of component (c), R¹ is C₁-C₁₂alkyl,
when Q is -S-, R² is C₈-C₁₈alkyl or an -R³-COO-R⁴ radical, and,
when Q is -O-CO-, R² is C₇-C₁₈alkyl, C₈-C₁₈alkenyl, phenyl or a -CH=CH-COO-R⁵ radical,
R⁵ is C₁-C₁₈alkyl or C₅-C₇cycloalkyl,
when Q is -O-CO-, R⁶ is C₁-C₄alkylene, o-phenylene or a -CH=CH- group,
R⁸ is C₁-C₁₈aIkyl, C₂-C₁₈alkenyl, phenyl or a -CH=CH-COO-R⁵ radical, and
R⁹ is butylene, o-phenylene or a -CH=CH- group.

3. A composition according to claim 2, in which, in the compounds of component (c), R¹ is C₃-C₉alkyl,
when Q is -S-, R² is an -R³-COO-R⁴ radical, and,
when Q is -O-CO-, R² is C₇-C₁₁alkyl or a -CH=CH-COO-R⁵ radical,
R³ is methylene or ethylene,
R⁴ is C₈-C₁₈alkyl,
R⁵ is C₁-C₈alkyl or cyclohexyl,
when Q is -S-, R⁶ is methylene or ethylene, and,
when Q is -O-CO-, R⁶ is a -CH=CH- group,
R⁷ is -C₂H₄-,
R⁸ is C₈-C₁₂alkyl or a -CH=CH-COO-R⁵ radical, and
R⁹ is a -CH=CH- group.

4. A composition according to claim 3, in which the compound(s) of component (c) is (are) of the formulae I, III and/or IV in which Q is -S-.

5. A composition according to claim 3, in which the compound(s) of component (c) conform(s) to the formula I, formula II and/or formula V.

6. A composition according to claim 1, in which component (a) is 25-50 % by weight of PVC and component (b) is 75-50 % by weight of at least one of the copolymers mentioned in claim 1.

7. A composition according to claim 1, in which component (a) is 40-75 % by weight of PVC and component (b) is 60-25 % by weight of at least one of the copolymers mentioned in claim 1.

8. A composition according to claim 1, in which component (d) is potassium perchlorate, sodium perchlorate, barium perchlorate and/or calcium perchlorate.

9. A composition according to claim 1, additionally containing, per 100 parts by weight of (a) and (b),
(e) 5-50 parts by weight of a monomeric and/or polymeric plasticiser.

10. A composition according to claim 1, additionally containing lubricants, pigments, processing assistants, fillers, antioxidants and/or light stabilisers.

11. A composition according to claim 1, containing no further tin stabilisers in addition to the organotin compounds of component (c) and the comproportionation products thereof.

12. The use of a composition according to any one of claims 1-11 for the production of sheeting and hollow articles in the motor vehicle industry.

13. The use of an organotin compound defined in claim 1 as component (c) in combination with a perchlorate of a monovalent and/or divalent metal defined in claim 1 as component (d) for stabilising moulding compositions comprising 20-80 % by weight of a vinyl chloride homopolymer (PVC) and 80-20 % by weight of at least one copolymer from the group consisting of acrylonitrile-butadiene-styrene (ABS), acrylonitrile-butadiene (NBR), acrylonitrile-acrylate (NAR), styrene-acrylonitrile (SAN) and ethylene-vinyl acetate (EVA), against damage by heat and light.

14. A process for stabilising moulding compositions comprising (a) 20-80 % by weight of a vinyl chloride homopolymer (PVC) and (b) 80-20 % by weight of at least one copolymer from the group consisting of acrylonitrile-butadiene-styrene (ABS),
acrylonitrile-butadiene (NBR), acrylonitrile-acrylate (NAR), styrene-acrylonitrile (SAN) and ethylene-vinyl acetate (EVA), against damage by heat and light, which comprises adding to the compositions (per 100 parts by weight of (a) and (b)) 0.5-5 parts by weight of at least one of the organotin compounds defined in claim 1 as component (c) in combination with 0.01-1.0 part by weight (per 100 parts by weight of (a) and (b)) of at least one of the perchlorates of monovalent and/or divalent metals defined in claim 1 as component (d).

## Revendications

1. Composition contenant
(a) de 20 à 80 % en poids d'un homopolymère de chlorure de vinyle (PVC),
(b) de 80 à 20 % en poids d'au moins un copolymère pris parmi l'acylonitrile-butadiène-styrène (ABS), l'acylonitrile-butadiène (NBR), l'acylonitrile-acrylate (NAR), le styrène-acrylonitrile (SAN) et l'éthylène-acétate de vinyle (EVA),
(c) de 0,5 à 5 % en poids (par rapport à (a) et à (b)) d'au moins un composé d'organo-étain de formules I à V
[R¹]ᵢSn[-Q-R²]₄₋ᵢ (I) 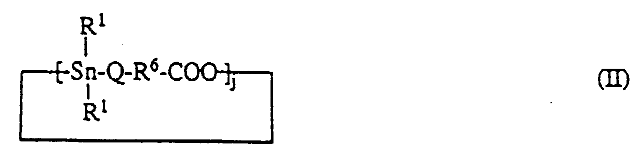 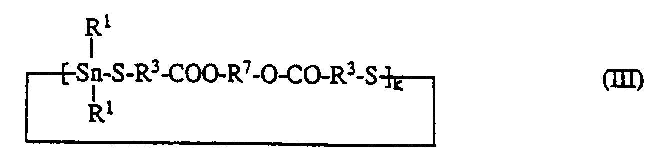 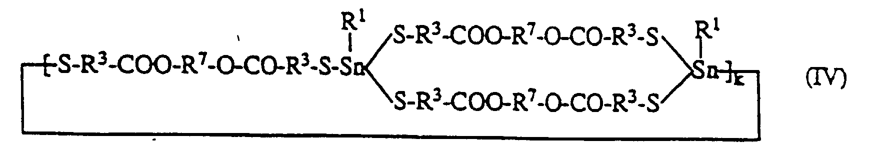 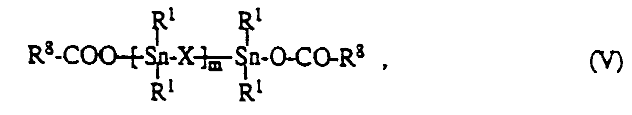
où
i vaut 1 ou 2, j va de 1 à 6, k va de 1 à 3 et m va de 1 à 4,
R¹ représente des groupes alkyle en C₁-C₁₂ ou (alcoxy en C₁-C₈)-carbonyléthyle,
Q représente -S- ou -O-CO-, et
lorsque Q représente -S-, R² représente un groupe alkyle en C₈-C₁₈ ou un reste -R³-COO-R⁴, et
lorsque Q représente -O-CO-, R² représente des groupes alkyle en C₁-C₁₈, alcényle en C₂-C₁₈, phényle, phényle substitué par un alkyle en C₁-C₄, ou un reste -CH=CH-COO-R⁵,
R³ représente des groupes méthylène, éthylène ou o-phénylène,
R⁴ représente alkyle en C₅-C₁₈,
R⁵ représente alkyle en C₁-C₁₈, cycloalkyle en C₅-C₇ ou benzyle,
lorsque Q représente -S-, R⁶ représente des groupes méthylène, éthylène ou o-phénylène, et
lorsque Q représente -O-CO-, R⁶ représente des groupes alkylène en C₁-C₈, o-phénylène ou un groupe -CH=CH-,
R⁷ représente des groups alkylène en C₂-C₄ ou alkylène en C₄-C₈ interrompu par -O-,
R⁸ représente des groupes alkyle en C₁-C₁₈, alcényle en C₂-C₁₈, phényle ou phényle substitué par alkyle en C₁-C₄, ou un reste -CH=CH-COO-R⁵,
X représente -O- ou/et -O-CO-R⁹-COO-, et
R⁹ représente alkylène en C₁-C₈, o-phénylène ou un groupe -CH=CH-, ainsi que
(d) de 0,01 à 1,0 % en poids (par rapport à (a) et (b)) d'au moins un perchlorate d'un métal mono- et/ou bivalent,
une composition constituée de
50 parties en poids de PVC,
50 parties en poids d'ABS,
1,0 partie en poids de dimaléate de dioctylétain polymère,
0,5 partie en poids de Mg₄Al₂(OH)₁₂CO₃.3H₂O,
0,8 partie en poids de monostéarate de glycérine,
0,4 partie en poids de cire,
0,5 en poids de Mg₃ZnAl₂(OH)₁₂(CO₃)_{0,4}(ClO₄)_{1,2}.3H₂O, ou
0,5 partie en poids de Mg₃ZnAl₂(OH)₁₂(ClO₄)_{2,0}.3H₂O, ou
0,5 partie en poids de Mg₄Al₂(OH)₁₂(CO₃)_{0,4}(ClO₄)_{1,2}.3H₂O et
0,05 partie en poids de stéarate d'étain
étant exclue.

2. Composition selon la revendication 1, dans laquelle dans les composés du composant (c)
R¹ représente un groupe alkyle en C₁-C_{12,}
lorsque Q représente -S-, R² représente alkyle en C₈-C₁₈ ou un reste -R³-COO-R⁴, et
lorsque Q représente -O-CO-, R² représente des groupes alkyle en C₇-C₁₈, alcényle en C₈-C₁₈, phényle ou un reste -CH=CH-COO-R⁵,
R⁵ représente des groupes alkyle en C₁-C₁₈, ou cyclalkyle en C₅-C₇,
lorsque Q représente -O-CO-, R⁶ représente des groupes alkylène en C₁-C₄, o-phénylène ou un groupe -CH=CH-,
R⁸ représente des groupes alkyle en C₁-C₁₈, alcényle en C₂-C₁₈, phényle ou un reste -CH=CH-COO-R⁵, de
R⁹ représente des groupes butylène, o-phénylène ou un groupe -CH=CH-.

3. Composition selon la revendication 2, dans laquelle dans les composés du composant (c)
R¹ représente un groupe alkyle en C₃-C₉,
lorsque Q représente -S-, R² représente un reste -R³-COO-R⁴, et
lorsque Q représente -O-CO-, R² représente alkyle en C₇-C₁₁ ou un reste -CH=CH-COO-R⁵,
R³ représente des groupes méthylène ou éthylène,
R⁴ représente un groupe alkyle en C₈-C₁₈,
R⁵ représente un groupe alkyle en C₁-C₈ ou cyclohexyle,
lorsque Q représente -S-, R⁶ représente un groupe méthylène ou éthylène, et
lorsque Q représente -O-CO-, R⁶ représente un groupe -CH=CH-,
R⁷ représente -C₂H₄-,
R⁸ représente un groupe alkyle en C₈-C₁₂ ou un reste -CH=CH-COO-R⁵, et
R⁹ représente un groupe -CH=CH-.

4. Composition selon la revendication 3, qui contient en tant que composé(s) du composant (c) celui (ceux) qui répond(ent) aux formules I, III et/ou IV, où Q représente -S-.

5. Composition selon la revendication 3, dans laquelle le(s) composé(s) du composant (c) correspond(ent) aux formules I, II et/ou V.

6. Composition selon la revendication 1, contenant en tant que composant (a) de 25 à 50 % en poids de PVC et en tant que composant (b) de 75 à 50 % en poids d'au moins un des copolymères cités dans la revendication 1.

7. Composition selon la revendication 1, contenant en tant que composant (a) de 40 à 75 % en poids de PVC et en tant que composant (b) de 60 à 25 % en poids d'au moins un des copolymères cités dans la revendication 1.

8. Composition selon la revendication 1, contenant en tant que composant (b) du perchlorate de potassium, de sodium, de baryum et/ou de calcium.

9. Composition selon la revendication 1, contenant pour 100 parties en poids de (a) et de (b), en plus (e) de 5 à 50 parties en poids d'un plastifiant monomère et/ou polymère.

10. Composition selon la revendication 1, contenant en plus des lubrifiants, des pigments, des adjuvants de mise en oeuvre, des charges, des antioxydants et/ou des photoprotecteurs.

11. Composition selon la revendication 1, ne contenant pas au côté des composés d'organo-étain du composant (c) et de leurs produits de comproportionnation, d'autres stabilisants à base d'étain.

12. Utilisation des compositions selon l'une des revendications 1 à 11, pour la préparation de feuilles et de corps creux pour l'industrie automobile.

13. Utilisation des composés d'organo-étain définis en tant que composant (c) dans la revendication 1, en combinaison avec les perchlorates de métaux mono- et/ou bivalents définis en tant que composant (d) dans la revendication 1, pour la stabilisation des matières à mouler, constituées de 20 à 80 % en poids d'un homopolymère de chlorure de vinyle (PVC) et de 80 à 20 % en poids d'au moins un copolymère pris parmi l'acrylonitrile-butadiène-styrène (ABS), l'acrylonitrile-butadiène (NBR), l'acrylonitrile-acrylate (NAR), le styrène-acrylonitrile (SAN) et l'éthylène-acétate de vinyle (EVA), contre l'influence nocive de la chaleur et de la lumière.

14. Procédé pour la stabilisation des matières à mouler constituées de (a) de 20 à 80 % en poids d'un homopolymère de chlorure de vinyle (PVC) et (b) de 80 à 20 % en poids d'au moins un copolymère pris parmi l'acrylonitrile-butadiène-styrène (ABS), l'acrylonitrile-butadiène (NBR), l'acrylonitrile-acrylate (NAR), le styrène-acrylonitrile (SAN) et l'éthylène-acétate de vinyle (EVA), contre l'influence nocive de la chaleur et de la lumière, caractérisé en ce que l'on ajoute aux matières (pour 100 parties en poids de (a) et de (b)), de 0,5 à 5 parties en poids d'au moins un des composés d'organo-étain définis en tant que composant (c) dans la revendication 1, en combinaison avec 0,01 à 1,0 partie en poids (pour 100 parties en poids de (a) et de (b)) d'au moins un des perchlorates de métaux mono- et/ou bivalents définis en tant que composant (d) dans la revendication 1.
